# EUROPÄISCHE PATENTSCHRIFT

(11) **EP 0 486 659 B1**
(45) Veröffentlichungstag und Bekanntmachung des Hinweises auf die Patenterteilung: **15.02.1995**
(21) Anmeldenummer: 91911226.8
(22) Anmeldetag: 12.06.1991
(51) Int. Cl.: B60N 2/22

(54) **GELENKBESCHLAG FÜR SITZE MIT VERSTELLBARER RÜCKENLEHNE**
HINGE MOUNTING FOR SEAT WITH AN ADJUSTABLE BACK
ARMATURE ARTICULEE POUR SIEGE A DOSSIER A INCLINAISON VARIABLE

(30) Priorität: 12.06.1990 DE 4018819
(43) Veröffentlichungstag der Anmeldung: 27.05.1992
(73) Patentinhaber: P.A. Rentrop, Hubbert & Wagner Fahrzeugausstattungen GmbH & Co. KG, 31653 Stadthagen (DE)
(72) Erfinder: ERNST, Hans-Hellmut, D-2070 Ahrensburg (DE)
(74) Vertreter: Patentanwälte Dipl.-Ing. Bodo Thielking Dipl.-Ing. Otto Elbertzhagen
(86) Internationale Anmeldenummer: EP9101098
(87) Internationale Veröffentlichungsnummer: WO9119622

(56) Entgegenhaltungen:
- EP-A- 0 048 294
- EP-A- 0 207 182
- EP-A- 0 207 183
- DE-A- 3 744 454
- DE-A- 3 816 510
- GB-A- 2 202 579

## Beschreibung

### TECHNISCHES GEBIET

Die Erfindung betrifft einen Gelenkbeschlag für Sitze mit verstellbarer Rückenlehne nach dem Oberbegriff des Anspruchs 1.

### STAND DER TECHNIK

Bei einem bekannten Gelenkbeschlag dieser Art (EP-A-482 94) ist der Exzenter als Kegelstumpf ausgebildet. Dieser Exzenter ist auf der Antriebsachse gelagert und läuft in einer konischen Bohrung des einen Galenkteils. Die Lagerzapfen der Antriebsachse sind in Bohrungen des anderen Gelenkteils gelagert, die auf unterschiedlichen Seiten des Kegelstumpfes vorgesehen sind. Damit das andere Gelenkteil zwei Lagerbohrungen ausweisen kann, besitzt das entsprechende Gelenkteil ein Lagerschild, welches die zweite Lagerbohrung trägt.

Der bekannte Beschlag hat den Nachteil, daß er vergleichsweise breit baut und außerdem aufwendig ist. Das Vorsehen von zu beiden Seiten des Exzenters vorgesehenen Lagerstellen führt in der Großserienfertigung zu dem Problem, daß ein exaktes Fluchten dieser Lagerstellen nicht sicher gewährleistet ist. Aus nicht exakt fluchtenden Lagerstellen ergeben sich zwangsläufig Verklemmungen in den Lagerstellen, welche unzumutbar hohe Verstellmomente am Antriebsrad bewirken.

Bei einem weiteren Gelenkbeschlag der als bekannt vorausgesetzten Art (DE-U-87 05 554) ist der Exzenter als Ringkörper ausgebildet, der an seinem äußeren Umfang eine konische Fläche aufweist und im Zentrum eine kreiszylindrische Bohrung, die auf einem die Antriebswelle durchsetzenden Bund gelagert ist. Der konische Ring ist mit der Antriebswelle drehfest verbunden. Bei dieser bekannten Lösung müssen insgesamt drei Lagerstellen vorgesehen werden. Ein praktisch funktionsfähiger Beschlag hat darüber hinaus den Nachteil, daß er relativ breit bauen muß.

Bei einem weiteren bekannten Gelenkbeschlag (DE-A-37 44 454) läuft ein in Drehachsenrichtung unverschieblicher, angetriebener konischer Exzenter in einem ihn umgebenden Konusring. Der Konusring ist an seinem Umfang in einer Bohrung des einen Gelenkteils geführt und unter der Wirkung einer Feder in axialer Richtung verschiebbar. Auch bei dieser bekannten Konstruktion sind zwei kreiszylindrische Lagerstellen und eine konische Lagerstelle vorgesehen, wobei mindestens die beiden kreiszylindrischen Lagerstellen genau miteinander fluchten müssen. Diese Forderung ist bei einer Großserienfertigung praktisch nicht oder nur mit einem sehr hohen Aufwand zu erfüllen.

### DIE ERFINDUNG

Ausgehend von diesem Stand der Technik liegt der Erfindung die Aufgabe zugrunde, einen Beschlag der als bekannt vorausgesetzten Art so auszubilden, daß die Zahl der vorhandenen Lagerstellen reduziert wird.

Die Lösung dieser Aufgabe erfolgt mit den Merkmalen des Kennzeichnungsteils von Anspruch 1. In den Unteransprüchen sind zweckmäßige Weiterbildungen des Gelenkbeschlags beschrieben.

Der erfindungsgemäße Gelenkbeschlag besitzt lediglich eine zylindrische und eine konische Lagerstelle. Diese beiden Lagerstellen liegen konzentrisch zueinander im gleichen Breitenbereich des Gelenkbeschlags. Auf eine den Exzenter tragende Schwenkachse wird vollständig verrichtet. Der erfindungsgemäße Beschlag vermeidet eine Verkantung im Sitzbeschlag sicher und führt zu einer guten Lagerstabilität und Führungsqualität.

Der Beschlag kann vergleichweise schmal ausgeführt werden. Es ergibt sich bei Bedarf auch die Möglichkeit, auf den Einsatz teuren Wälzlagern zu verzichten und preisgünstige Gleitpaarungen vorzusehen.

### KURZBESCHREIBUNG DER ZEICHNUNGSABBILDUNG

In der Zeichnung sind bevorzugte Ausführungsformen der Erfindung dargestellt. Es zeigen:
- Figur 1 -: eine schematische Ansicht einer ersten Ausführungsform des Gelenkbeschlags,
- Figur 2 -: einen Schnitt entlang Ebene II-II gemäß Figur 1,
- Figur 3 -: einen Schnitt entlang Ebene II-II durch eine zweite Ausführungsform,
- Figur 4 -: einen Schnitt entlang Ebene II-II durch eine dritte Ausführungsform,
- Figur 5 -: eine Schnitt entlang Ebene II-II durch eine vierte Ausführungsform.

### BESTER WEG ZUR AUSFÜHRUNG DER ERFINDUNG

In den Zeichnungen sind gleiche oder einander entsprechende Teile mit gleichen Bezugszeichen bezeichnet, die sich bei Bedarf nur durch die Anzahl der Hochstriche unterscheiden.

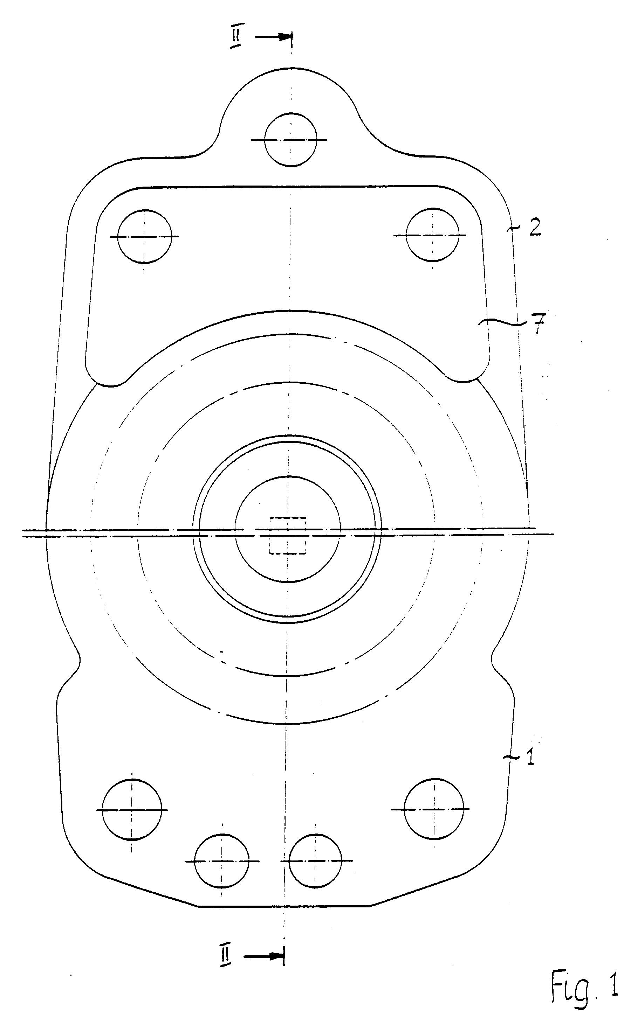

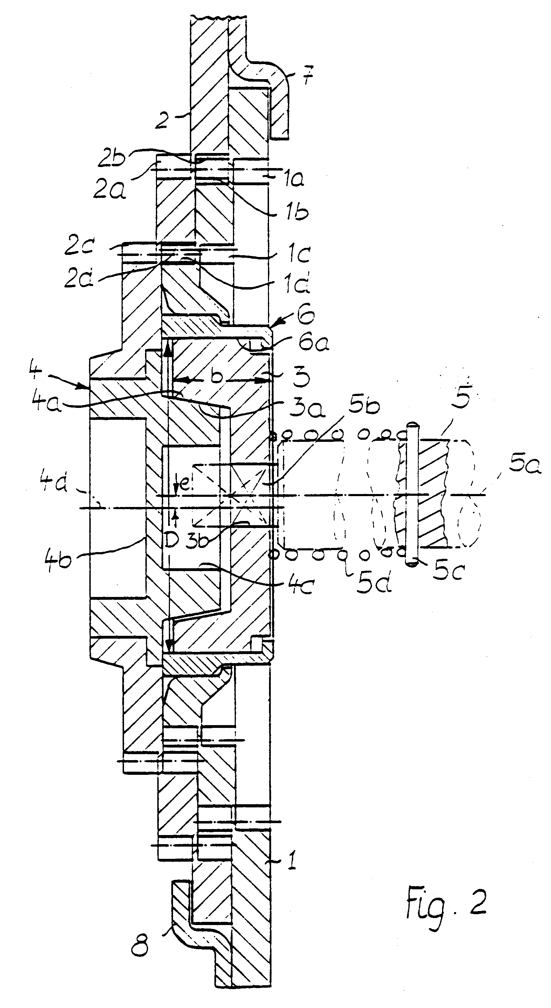

Zunächst zur Ausführungsform gemäß Figuren 1 und 2:
Der Gelenkbeschlag besitzt eine sogenannte Doppelverrahnung in beiden Gelenkteilen 1 und 2. Der erste Gelenkteil 1 ist mit dem nicht dargestellten Sitz fest verbunden. Der zweite Gelenkteil 2 ist mit der Rückenlehne fest verbunden. Das zweite Gelenkteil 2 weist eine auf einem äußeren Umfang liegende Leerverzahnung 2a auf und eine auf einem äußeren Umfang liegende Arbeitsverzahnung 2b. Weiterhin weist der zweite Gelenkteil 2 eine auf einem kleineren, inneren Durchmesser liegende innere Leerverzahnung 2c sowie eine innere Arbeitsverzahnung 2d auf.

Die Arbeitsverzahnung 2b steht im Eingriff mit der entsprechenden Arbeitsverzahnung 1b. Der auf dem äußeren Durchmesser liegenden Arbeitsverzahnung 1b entspricht die auf annähernd gleichem Durchmesser liegende äußere Leerverzahnung 1a.

Mit der Arbeitsverzahnung 2d arbeitet die auf dem inneren Durchmesser liegende Arbeitsverzahnung 1d zusammen, der die innere Leerverzahnung 1c entspricht. Die Verzahnungen 1a, 1b, 1c und 1d sind in dem ersten Gelenkteil 1 vorgesehen.

Der zweite Gelenkteil 2 besitzt eine Axialklammer 7, welche den benachbarten runden Bereich des ersten Gelenkteis übergreift. Der erste Gelenkteil besitzt eine Axialklammer 8, welche den benachbarten runden Gelenkteil des zweiten Gelenkteils übergreift.

Der erste Gelenkteil 1 besitzt eine eingepreßte zentrale Führungsbuchse 6. In der zylindrischen Bohrung 6a der Lagerbuchse 6 mit dem Durchmesser D ist ein als Scheibe mit einer Breite b ausgebildeter Exzenter 3 drehbar gelagert. Der Exzenter 3 besitzt eine exzentrisch zu seinem Umfang angeordnete konische Ausnehmung 3a. Diese Ausnehmung 3a umgreift eine konische Gegenfläche 4a einer Nabe 4, welche fest mit dem ersten Gelenkteil 1 verbunden ist. Die Nabe 4 besitzt eine Trennwand 4b. Im Zentrum des konischen Bereichs 4a der Nabe ist eine Ausnehmung 4c vorgesehen.

Der Exzenter 3 besitzt eine Vierkantausnehmung 3b. In diese Vierkantausnehmung 3b greift ein Vierkantzapfen 5b einer Antriebswelle 5 ein.

Die Drehachse 5a der Antriebswelle und die Mittelachse 4d der Nabe 4 sind um die Exzentrizität e gegeneinander versetzt.

Die Antriebswelle 5 besitzt einen diese quer durchsetzenden Anschlagstift 5b, an dem sich eine Druckfeder 5d abstützt. Diese Druckfeder liegt mit ihrem anderen Ende an der gemäß Figur 2 rechten Rückseite des Exzenters 3 an. Die Antriebswelle 5 erstreckt sich auf dem gemäß Figur 2 rechten Ende in einen zweiten Gelenkbeschlag, der an der gegenüberliegenden Seite der Rückenlehne bzw. des Sitzes vorgesehen ist. Die in axialer Richtung wirkende Druckkraft wird durch die Druckfeder 5d auf den Exzenter 3 ausgeübt. Diese Druckkraft führt zu einer Eliminierung des Spiels zwischen den Verzahnungen des ersten und zweiten Gelenkteils nach dem Prinzip der schiefen Ebene. Die Verschiebung des Exzenters 3 gemäß Figur 2 nach links führt zu einer radialen Zustellbewegung in Richtung auf die im Eingriff befindlichen Bereiche der Getriebeverzahnungen. Dabei werden die Zähne an ihren Zahnflanken zusammengepreßt und das Zahnspiel eliminiert.

Die Trennwand 4b zwischen der gemäß Figur 2 linken zentralen Ausnehmung der Nabe 4 und der Ausnehmung 4c stellt eine sichere Barriere gegen ein Eindringen von Reinigungsmitteln, Farben od. dgl. in die Gleitflächen des Beschlags dar.

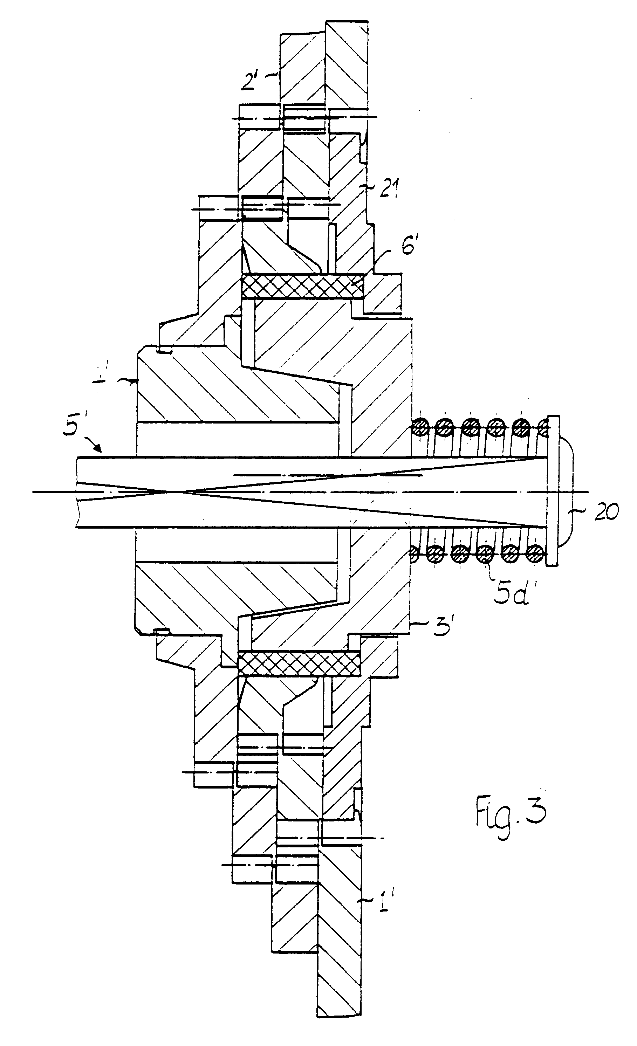

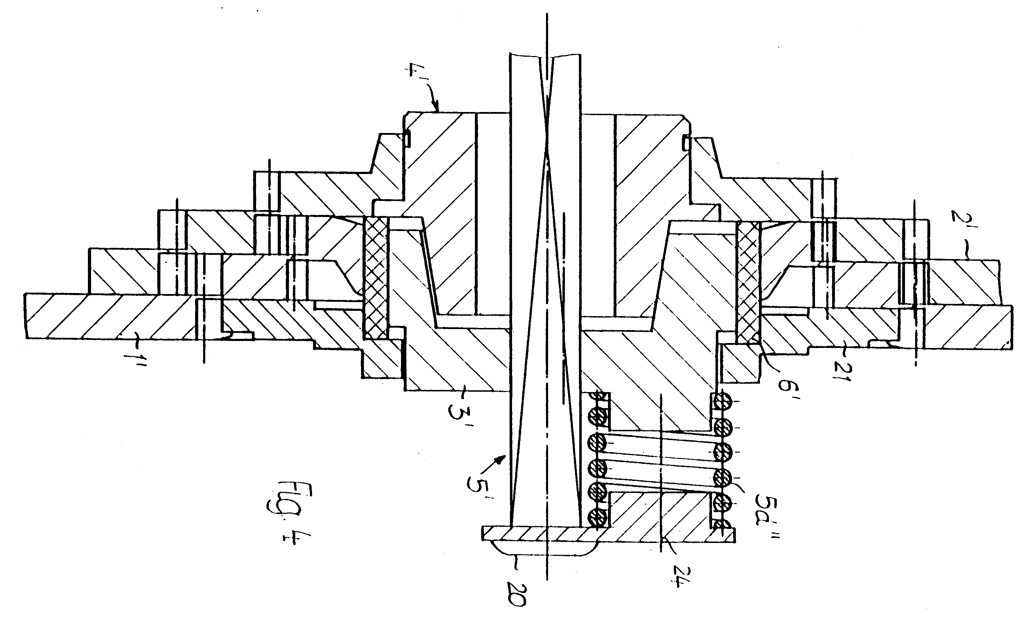

Bei den Ausführungsformen gemäß Figuren 3 bis 5 ist der Exzenter als hohle Buchse ausgebildet, die von der Antriebswelle 5' durchsetzt wird. Die Antriebswelle 5' ist bei allen drei Ausführungsformen als Rechteckwelle ausgebildet, welche über eine passende Rechteckausnehmung den Exzenter 3' mitnimmt. Der Gelenkteil 1' ist mit einer Lagerscheibe 21 verprägt, welche die Lagerbuchse 6' mit übergreift. Während bei der Ausführungsform gemäß Figur 3 die Antriebswelle 5' von einer Druckfeder 5d' konzentrisch umgeben wird, weiche sich einerseits an einer stirnseitigen Anschlagplatte (20) und andererseits an der Stirnwand des Exzenters 3' abstützt, ist bei der Ausführungsform gemäß Figur 4 die Druckfeder 5d'' mit Abstand und achsparallel zu der Drehachse der Antriebswelle 5' angeordnet. Die Federkraft der Druckfeder 5d' greift dabei im wesentlichen dort an, wo der Verdrängungskeil des Exzenters 3' wirkt.

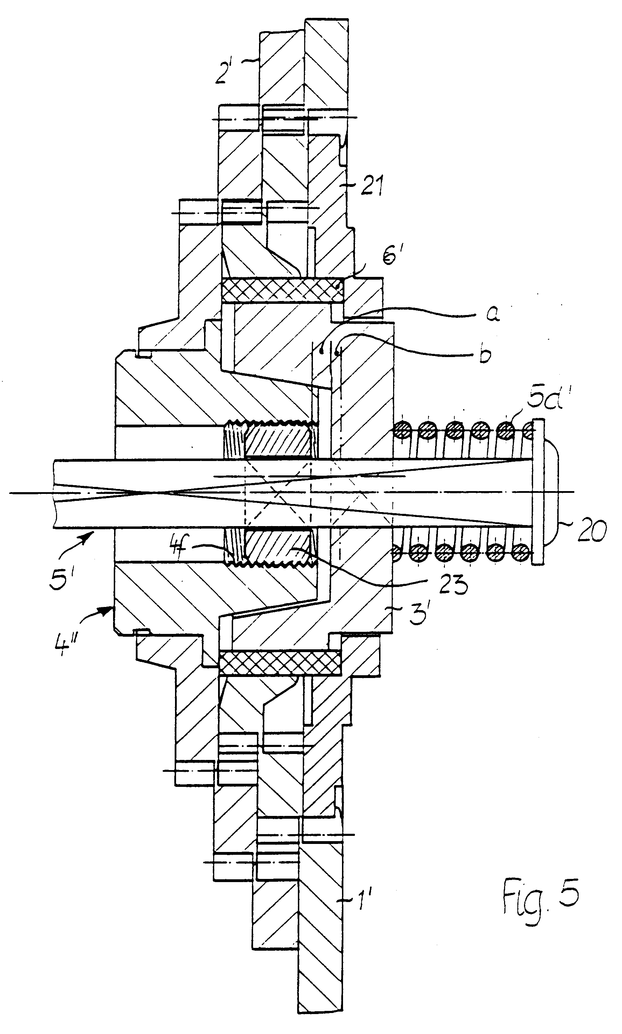

Bei der Ausführungsform gemäß Figur 5 ist die Anordnung der Druckfeder 5d' gleich der Anordnung in Figur 3. Die Ausrührungsform gemäß Figur 5 unterscheidet sich gegenüber der Ausführungsform gemäß Figur 3 im wesentlichen dadurch, daß im Zentrum der Nabe 4'' eine Stellmutter 23 vorgesehen ist, deren Außengewinde mit dem Innengewinde 4f der Nabe 4'' zusammenwirkt. Bei einem Verdrehen der Antriebswelle 5' wird die Stellmutter 23' in axialer Richtung verstellt. Bei einem Drehen in die Liegesitzposition erfolgt eine Bewegung der Stellmutter 23 gemäß Figur 5 nach rechts. Innerhalb des Verstellbereichs a bleibt die Spielfreiheit des Beschlages bestehen. Nach etwa 2/3 des Gesamtverstellbereichs wird der Exzenter 3' um den Bereich b nach rechts gegen Rückstellkraft der Feder 5d verschoben. Dabei wird die Spielfreiheit aufgehoben und damit das Verstellmoment reduziert.

Im Hauptverstellbereich wirkt bei dieser Ausführungsform die volle Kraft der Axialdruckfeder 5d' auf den Exzenter mit der Folge, daß Spielfreiheit herrscht. In einem Nebenverstellbereich, der sogenannten Liegesitzposition, wird das Verstellmoment durch ein axiales Verschieben des Exzenters geringer. Mit der entsprechenden Verschiebung des Exzenters 3' gemäß Figur 5 nach rechts in dem Nebenverstellbereich entstent ein größeres Spiel, welches in diesem Nebenverstellbereich jedoch ohne weiteres akzeptabel ist.

## Patentansprüche

1. Gelenkbeschlag für Sitze mit verstellbarer Rückenlehne, insbesondere für Kraftfahrzeugsitze, bei denen ein dem Sitz zugeordneter fester Gelenkteil (1) und ein der Lehne zugeordneter schwenkbarer Gelenkteil (2) verschwenkbar miteinander verbunden sind und eine die Lage der beiden Gelenkteile (1, 2) zueinander bestimmende, als Taumelgetriebe ausgebildete Neigungsverstellvorrichtung vorgesehen ist und das Taumelgetriebe einen in Drehachsenrichtung verschiebbaren und über Federkraft in Drehachsenrichtung vorgespannten Exzenter (3) aufweist, der zum Verstellen des Gelenkbeschlags drehbar ist und an einem konischen Gegenbereich eines Gelenkteils abläuft,
dadurch gekennzeichnet,
daß der Exzenter (3) auf einem äußeren Umfang in einer zylindrischen Bohrung (6a) des einen Gelenkteils (1) gelagert ist und in seinem Zentrum eine konische, exzentrisch zum Außendurchmesser des Exzenters (3) angeordnete Ausnehmung (3a) aufweist, die auf der konischen Gegenfläche (4a) einer in die Ausnehmung eintauchenden Nabe (4) od. dgl. abläuft, welche fest mit dem anderen Gelenkteil (2) verbunden ist.

2. Gelenkbeschlag nach Anspruch 1,
dadurch gekennzeichnet,
daß das die zylindrische Bohrung (6a) für die Lagerung des Exzenters (3) aufweisende erste Gelenkteil (1) fest mit dem Sitz verbunden ist und das diesem gegenüber verschwenkbare zweite Gelenkteil (2) fest mit der Rückenlehne verbunden ist.

3. Gelenkbeschlag nach Anspruch 1 oder 2,
dadurch gekennzeichnet,
daß der Exzenter (3) zumindest annähernd scheibenförmig ausgebildet ist.

4. Gelenkbeschlag nach einem oder mehreren der Ansprüche 1 bis 3,
dadurch gekennzeichnet,
daß die Breite (b) des scheibenförmigen Exzenters (3) weniger als ein Drittel von dessen Durchmesser (D) beträgt.

5. Gelenkbeschlag nach einem oder mehreren der Ansprüche 1 bis 4,
dadurch gekennzeichnet,
daß der Exzenter (3) eine zentrale Ausnehmung (3b) für eine formschlüssige Verbindung mit einer Antriebswelle (5) für den Gelenkbeschlag aufweist.

6. Gelenkbeschlag nach einem oder mehreren der Ansprüche 1 bis 5,
dadurch gekennzeichnet,
daß die Antriebswelle (5) für den Exzenter (3) eine Verbindungswelle für die auf beiden Seiten des Sitzes vorgesehenen Gelenkbeschläge ist.

7. Gelenkbeschlag nach einem oder mehreren der Ansprüche 1 bis 6,
dadurch gekennzeichnet,
daß die auf den Exzenter (3) ausgeübte axiale Vorspannung mit Hilfe einer Druckfeder (5d) erfolgt, welche sich einerseits am Exzenter (3) und andererseits an der Antriebswelle (5) bzw. einer damit verbundenen Anschlagfläche (5c) abstützt.

8. Gelenkbeschlag nach einem oder mehreren der Ansprüche 1 bis 7,
dadurch gekennzeichnet,
daß der Exzenter (3) in einer Führungsbuchse (6) läuft.

9. Gelenkbeschlag nach einem oder mehreren der Ansprüche 1 bis 8,
dadurch gekennzeichnet,
daß der Exzenter (3) aus Sintermetall besteht.

10. Gelenkbeschlag nach einem oder mehreren der Ansprüche 1 bis 9,
dadurch gekennzeichnet,
daß die Nabe (4) aus Sintermetall besteht.

11. Gelenkbeschlag nach einem oder mehreren der Ansprüche 1 bis 10,
dadurch gekennzeichnet,
daß die Lagerbuchse (6) aus Sintermetall besteht.

12. Gelenkbeschlag nach einem oder mehreren der Ansprüche 1 bis 11,
dadurch gekennzeichnet,
daß die Wirkungslinie (24) der Druckfeder (5d'') parallel zur Drehachse der Antriebswelle (5') verläuft, und zwar im Anlagebereich zwischen konischer Fläche der Nabe (4') und konischer Fläche des Exzenters (3').

13. Gelenkbeschlag nach einem oder mehreren der Ansprüche 1 bis 12,
dadurch gekennzeichnet,
daß auf der Antriebswelle (5') eine drehfest mit dieser, jedoch axial verschieblich gelagerte Stellmutter (23) vorgesehen ist, welche in einem vorgegebenen Drehverstellbereich unter Überwindung der Rückstellkraft der Rückstellfeder (5d') die konische Innenfläche des Exzenters (3') von der konischen Außenfläche der Nabe (4') abhebt.

14. Gelenkbeschlag nach Anspruch 13,
dadurch gekennzeichnet,
daß die Stellmutter ein Außengewinde aufweist, das mit dem Innengewinde der Nabe (4') korrespondiert.

## Claims

1. Articulated fitment for seats with an adjustable backrest, more particularly for motor vehicle seats, wherein a fixed articulation part (1) associated with the seat and a swivel articulation part (2) associated with the backrest are connected together for swivel movement, and an incline adjustment device is provided which is designed as a rocker gear and determines the position of the two articulation parts (1,2) relative to each other wherein the rocker gear has an eccentric (3) which is pretensioned by spring force in the direction of the rotary axis and is displaceable in this direction, the eccentric being rotatable to adjust the articulated fitment and runs on a conical counter area of one articulation part,
characterised in that the eccentric (3) is mounted on an outer circumference in a cylindrical bore (6a) of one articulation part (1) and has in its centre a conical recess (3a) mounted eccentric relative to the outer diameter of the eccentric (3) wherein this recess runs on the conical counter face (4a) of a hub (4) or the like which projects into the recess and is fixedly connected to the other articulation part (2).

2. Articulated fitment according to claim 1 characterised in that the first articulation part (1) having the cylindrical bore (6a) for the bearing of the eccentric (3) is fixedly connected to the seat and the second articulation part (2) which swivels relative to same is fixedly connected to the backrest.

3. Articulated fitment according to claim 1 or 2 characterised in that the eccentric (2) is designed at least approximately disc-shaped.

4. Articulated fitment according to one or more of claims 1 to 2 characterised in that the width (b) of the disc-like eccentric (3) amounts to less than a third of its diameter (D).

5. Articulated fitment according to one or more of claims 1 to 4 characterised in that the eccentric (3) has a central recess (3b) for a positive connection with a drive shaft (5) for the articulated fitment.

6. Articulated fitment according to one or more of claims 1 to 5 characterised in that the drive shaft (5) for the eccentric (3) is a connecting shaft for the articulated fitments provided on either side of the seat.

7. Articulated fitment according to one or more of claims 1 to 6 characterised in that the axial pretension exerted on the eccentric (3) is provided by means of a compression spring (5d) which is supported on one side on the eccentric (3) and on the other side on the drive shaft (5) or a stop face (5c) connected therewith.

8. Articulated fitment according to one or more of claims 1 to 7 characterised in that the eccentric (3) runs in a guide sleeve (6).

9. Articulated fitment according to one or more of claims 1 to 8 characterised in that the eccentric (3) is made of sintered metal.

10. Articulated fitment according to one or more of claims 1 to 9 characterised in that the hub (4) is made of sintered metal.

11. Articulated fitment according to one or more of claims 1 to 10 characterised in that the bearing sleeve (6) is made of sintered metal.

12. Articulated fitment according to one or more of claims 1 to 11 characterised in that the active line (24) of the compression spring (5d'') runs parallel to the axis of rotation of the drive shaft (5'), namely in the contact area between the conical face of the hub (4') and the conical face of the eccentric (3').

13. Articulated fitment according to one or more of claims 1 to 12 characterised in that an adjusting nut (23) is provided on the drive shaft (5') where it is rotationally secured with same but is axially displaceable and in a predetermined rotational adjustment area by overcoming the resetting force of the resetting spring (5d') lifts the conical inner face of the eccentric (3') from the conical outer face of the hub (4').

14. Articulated fitment according to claim 13 characterised in that the adjusting nut has an external thread which corresponds with the inner thread of the hub (4').

## Revendications

1. Ferrure articulée pour sièges à dossier réglable, tout particulièrement pour les sièges de véhicules automobiles, dans lesquels une pièce articulée fixe (1), coordonnée au siège et une pièce articulée, pivotante (2), coordonnée au dossier, reliées ensemble, en pouvant être pivotées, et un dispositif de réglage de l'inclinaison, déterminant la position des deux pièces articulées (1, 2) par rapport l'une à l'autre, sont prévus, de même qu'un engrenage culbutant, présentant un excentrique (3) déplaçable dans le sens de l'axe de pivotement et précontraint par force de ressort dans le sens de l'axe de pivotement, lequel excentrique (3) peut être pivoté aux fins de déplacement de la ferrure articulée et glisse sur une zone antagoniste, conique d'une pièce articulée,
caractérisée en ce que
l'excentrique (3) est monté, sur un pourtour, dans une forure cylindrique (6a) de la pièce articulée (1) et est pourvu, au centre, d'une cavité (3a) conique disposée excentriquement par rapport au diamètre extérieur de l'excentrique (3), cette cavité (3a) glissant sur la surface antagoniste conique (4a) d'un moyeu (4) ou analogue, lequel s'enfonce dans la cavité et est relié fixement à l'autre pièce articulée (2).

2. Ferrure articulée selon la revendication 1, caractérisée en ce que
la première pièce articulée (1), présentant la forure cylindrique (6a) pour le montage de l'excentrique (3), est reliée fixement au siège et que la deuxième pièce articulée (2), déplaçable à celle-ci, est reliée fixement au dossier.

3. Ferrure articulée selon la revendication 1 ou 2,
caractérisée en ce que
l'excentrique (3) est conçu, au moins approximativement, en forme de disque.

4. Ferrure rticulée selon l'une ou plusieurs des revendications 1 à 3,
caractérisée en ce que
la largeur (b) e l'excentrique (3) en forme de disque est inférieure à un tiers du diamètre (D) de celui-ci.

5. Ferrure articulée selon l'une ou plusieurs des revendications 1 à 4,
caractérisée en ce que
l'excentrique (3) présente une cavité centrale (3b) pour le raccordement en engagement positif d'un arbre de commande (5) pour la ferrure articulée.

6. Ferrure articulée selon l'une ou plusieurs des revendications 1 à 5,
caractérisée en ce que
l'arbre récepteur (5) pour l'excentrique (3) est un arbre de transmission pour les ferrures articulées prévues des deux côtés du siège.

7. Ferrure articulée selon l'une ou plusieurs des revendications 1 à 6,
caractérisée en ce que
la précontrainte axiale, exercée sur l'excentrique (3) s'effectue à l'aide d'un ressort de pression (5d), qui s'appuie, d'une part, contre l'excentrique (3) et, d'autre part, contre l'arbre de commande (5) resp. contre une surface de butée (5c) raccordée à celui-ci.

8. Ferrure articulée selon l'une ou plusieurs des revendications 1 à 7,
caractérisée en ce que
l'excentrique (3) tourne dans une douille de guidage (6).

9. Ferrure articulée selon l'une ou plusieurs des revendications 1 à 8,
caractérisée en ce que
l'excentrique (3) est en métal fritté.

10. Ferrure articulée selon l'une ou plusieurs des revendications 1 à 9,
caractérisée en ce que
le moyeu (4) est en métal fritté.

11. Ferrure articulée selon l'une ou plusieurs des revendications 1 à 10,
caractérisée en ce que
le cousssinet (6) est en métal fritté.

12. Ferrure articulée selon l'une ou plusieurs des revendications 1 à 11,
caractérisée en ce que
la ligne d'action (24) du ressort de pression (5d'') s'étend parallèlement à l'axe de rotation de l'arbre de commande (5'), à savoir: dans la zone d'appui située entre la surface conique du moyeu (4') et la surface conique de l'excentrique (3').

13. Ferrure articulée selon l'une ou plusieurs des revendications 1 à 12,
caractérisée en ce que
un écrou de réglage (23) est prévu sur l'arbre de commande (5') et, résistant à la rotation avec celui-ci, tout en étant, cependant, déplaçable axialement, soulève la surface intérieure, conique de l'excentrique (3) de la surface extérieure, conique du moyeu (4'), dans une plage de réglage rotatif prédéterminée, en surmontant la force de rappel du ressort de rappel (5d').

14. Ferrure articulée selon la revendication 13,
caractérisée en ce que
l'écrou de réglage présente un filetage extérieur qui correspond au filetage intérieur du moyeu (4').
